# EUROPEAN PATENT APPLICATION

(11) **EP 4 563 223 A1**
(43) Date of publication of application: **04.06.2025**
(21) Application number: 23212768.8
(22) Date of filing: 28.11.2023
(51) Int. Cl.: B01J 20/22, B01D 53/02, B01J 20/28, B01J 20/30

(54) **ALUMINIUM FORMATE METAL-ORGANIC FRAMEWORK AND PRODUCTION THEREOF**

(71) Applicant: novoMOF AG, 4800 Zofingen (CH)
(72) Inventor: Toft, Charles, 4800 Zofingen (CH); Maurer, Oliver, 5004 Aarau (CH); Banach, Ewa, 1302 Vufflens-la-Ville (CH)
(74) Representative: P&TS SA (AG, Ltd.)

(57) **Abstract**

The invention concerns a process for producing an aluminium formate (ALF) metal-organic framework (MOF) material, comprising providing aluminium diacetate (Al(CH₃COO)₂(OH)) or any of its hydrates as a starting product, or providing a mixture of starting products comprising aluminium diacetate (Al(CH₃COO)₂(OH) or any of its hydrates, aluminium nitrate (Al(NO₃)₃) or any of its hydrates, and aluminium chloride (AlCl₃) or its hydrates in a formic acid solution to form a reaction mixture, and aging said reaction mixture for a period of time. The invention also concerns a ALF MOF material with a Brunauer-Emmet-Teller (BET) surface area ranging from 20 m²/g to 80 m²/g, and a device using said ALF MOF.

## Description

### Technical domain

The present invention concerns a method for producing an aluminium-based metal-organic framework material (MOFs) for CO₂ and/or H₂ capture, as well as an aluminium-based MOF material.

### Related art

Metal-organic frameworks (MOFs) are crystalline materials which exhibit a high porosity and vast internal surface areas, which render them attractive for green energy applications. As high-capacity adsorbents for a variety of gases MOFs are commonly used as storage material for gases, or for capturing or removing of specific gases.

A plethora of different MOF materials are known today, and their structure varies considerably with their composition. In addition, the conditions under which the MOF structures are formed have also a major impact on the physical properties and behaviour of the MOF material.

Divalent cation such as Zn²⁺, Cu²⁺, Co²⁺, etc. are most commonly used as metal components in MOF materials, generally achieving good crystallization results However, MOF framework comprising divalent metal cations are often chemically and hydrothermally instable.

Cations of a higher charge provide a stronger metal-ligand bond, which increases the hydrothermal stability of a MOF material. Metals of a higher valence, such as aluminium (Al), iron (Fe), vanadium (V) and zirconium (Zr) are therefore interesting metal candidates for robust MOF material. Compared to iron and vanadium, aluminium provides the additional advantage, that it is inert towards redox processes at a mild condition resulting in an even better stability. Moreover, aluminium is lightweight, low toxicity, abundant reserves in the earth, cheap and sustainable.

In particular Aluminium formate MOF (ALF) is a MOF that has recently attracted attention as a highly promising material for CO₂ capture, for O₂/N₂ separation, for hydrocarbon separation and for H₂ storage.

Aluminium formate has previously been synthesised by reacting Aluminium hydroxide with formic acid (Evans A. H. et al, 2022, Sci Adv vol 8, DOI: 10.1126/sciadv.ade1473).

Some examples report the addition of CO₂ into the reaction as a templating agent for crystallisation, either via Na₂CO₃ or direct bubbling of CO₂. Both methods successfully form the desired MOF structure but are not suitable for economical large-scale production, i.e. production of 100 kg or more, as only very low space-time-yields resulting in a poor reactor efficiency, are achieved with the synthesis methods known today.

It is therefore highly desirable to improve on the synthesis of ALF MOF to enable production at industrial scale of this highly versatile MOF.

### Short disclosure of the invention

It is an aim of the present invention to provide a process for producing an ALF MOF material that overcomes the shortcomings and limitations of the state of the art.

It is another aim of the invention to provide a process which is suitable for upscaling ALF MOF production to industrial scale.

It is yet another aim of the invention to provide an ALF MOF material with improved capacity for gas sorption.

According to the invention, these aims are attained by the object of the attached claims, and especially by a process for producing an aluminium formate (ALF) metal-organic framework (MOF) material, by providing a starting product, also called a starting reagent or starting material, which is either aluminium diacetate (Al(Ac)₂(OH), sometimes also referred to as aluminium acetate basic, or any of its hydrates as a starting product, or which is a mixture of aluminium diacetate (Al(Ac)₂(OH) or any of its hydrates, aluminium nitrate (Al(NO₃)₃) or any of its hydrates, and aluminium chloride (AlCl₃) or its hydrates.

The starting product, respectively the mixture of starting products, is provided in a solution to form a reaction mixture.

By using aluminium diacetate or any of its hydrates as a starting product, the space-time-yield of the formed ALF MOF could be significantly increased compared to known synthesis methods. In addition, the ALF MOF produced from the aluminium diacetate starting product also showed an improvement in CO₂ adsorption compared to ALF MOFs produced with known starting products.

Surprisingly, yield and in product quality, as determined by CO₂ adsorption, could be even further improved when the above-described mixture of starting products containing aluminium diacetate or any of its hydrates was provided for the production of ALF MOF.

The solution of the reaction mixture comprises formic acid.

In one embodiment formic acid is provided as the only solvent in the reaction mixture. Formic acid may be provided at 85 vol% to 100 vol%, for example at 95 vol%, of the solvents of the solution.

In another embodiment, the reaction mixture is an aqueous formic acid solution comprising 1 vol% to 15 vol%, or 1 vol% to 12 vol%, or 1 to 10 vol%, for example 5 vol% of water. It was found that ALF MOFs formed in aqueous formic acid solution comprising water in this range achieved better CO₂ adsorption results compared to ALF MOFs formed in formic acid as sole solvent.

The reaction mixture is aged for a period of time.

In one embodiment said period of time ranges from 4h to 48h, or form 8h to 24h. It may range from 4h to 12h. Aging periods below 4h result in reduced product yield. Shorter aging time may also affect the gas adsorption capacity of the ALF MOF product.

The reaction mixture may be aged at ambient temperatures, for example at 25 °C, or at higher temperatures. The reaction mixture may for example be aged at a temperature of 30 °C or more, or of 40 °C, or of 60 °C or more. The application of high temperatures to the reaction mixture during the aging period facilitates the formation of solid ALF MOF material in the reaction. However, the inventors could demonstrate, that aging temperatures as low as 25 °C resulted in good yields of a desired ALF MOF product. Lower temperatures, for example temperatures as low as 20 °C may therefore also be chosen for the aging process. When aging the reaction mixture at 25 °C or below, the reaction mixture should be allowed to age for longer, preferably for at least 24 hours, to allow for sufficient time for the formation of the ALF MOF material, thereby achieving better yields. A shorter aging time, for example 8 hours, is generally sufficient for temperatures of 60 °C or above.

The upper limit of the aging temperature is defined by the boiling point of the reaction mixture. The reaction mixture should not be heated above its boiling point. A suitable upper limit of the aging temperature may for example be 105 °C. Aging is preferably performed at atmospheric pressure. The boiling point of pure formic acid at atmospheric pressure is 100.8 °C.

In one embodiment of this invention the starter products are provided to the reaction mixture at a total molar concentration 0.1 mol/l to 3 mol/l, or from 0.4 mol/l to 2 mol/l.

A total concentration of the aluminium starting products of 2.25 mol/l yielded more than 300g of dried ALF MOF per litre of solvent. This yield is 10 times more of reported ALF MOF yields produced from different starting products. It was observed that at concentrations above 2.5 mol/l the mixture became viscous, making it more difficult to stir the reaction mixture. Inhomogeneous stirring may lead to the formation of unwanted side-products. It was also observed that inhomogeneous stirring of a viscous reaction mixture resulted in a decrease in yield and in a reduced CO₂ adsorption of the end products compared to ALF MOFs produced with starting products provided at lower concentrations.

For these reasons it is important to provide stirring equipment which is sufficiently powerful to ensure homogenous stirring of a viscous reaction mixture containing a higher concentration of starting products, in particular when the aluminium starting products are provided at a total concentration of 2.5 mol/l or more.

In one embodiment of this invention the mixture of starting products is provided to the reaction mixture, wherein the mole ratio of aluminium diacetate and any of its hydrates to aluminium nitrate and any of its hydrates is comprised from 5:1 to 30:1, or from 10:1 to 25:1, or from 15:1 to 20:1, or 18:1.

In one embodiment of this invention the mixture of starting products is provided to the reaction mixture, wherein the mole ratio of aluminium diacetate and any of its hydrates to aluminium chloride and any of its hydrates is 5:1 to 30:1, or 10:1 to 25:1, or 15:1 to 20:1, or 18:1.

In a preferred embodiment of this invention the mixture of starting products is provided to the reaction mixture, wherein the mole ratio of aluminium diacetate and any of its hydrates to of aluminium chloride and any of its hydrates to aluminium nitrate and any of its hydrates is 18:1:1.

In one embodiment, aluminium nitrate is provided first and aluminium diacetate and aluminium chloride are added to the nitrate. nitrate first, then the acetate and chloride. Providing the starting products in this order is safer, as it avoids excess generation of heat and gas The aluminium nitrate reaction mixture should be allowed to cool before adding aluminium chloride and aluminium acetate.

In one embodiment the aged reaction mixture is cooled. It may be cooled to room temperature or below room temperature.

In one embodiment the aged reaction mixture is filtered to retain the precipitated ALF MOF material as intermediary product.

Optionally, the intermediate product may be washed with an organic solvent. Polar volatile solvents, such as short chain alcohols, acetone, acetonitrile of tetrahydrofuran (THF) are particularly suited for this purpose.

The synthesis of ALF MOF according to this invention achieves very high product yields. ALF product yields may be at least 90%, or at least 95%, or at least 98%, or 100%.

Depending on the amount of starting products provided, yields of at least 40 g/l, or at least 70 g/l, or at least 100 g/l, or at least 130 g/l, 150 g/l, 180 g/l or 200 g/l, 300 g/l of 400 g/l or 450 g/l of dried ALF MOF material can be obtained by this method.

The intermediate product may be dried to obtain a dried ALF MOF end product.

The ALF MOF material synthesized according to this invention forms crystals of a ReO₃-type structure. The activated structure of the ALF MOF of this invention is Al(COOH)₃.

The crystalline ALF MOF product is characterized by a high degree of purity.

In one embodiment the crystalline ALF MOF product comprises less than 5%, or less than 3%, or less than 1% of impurities.

The invention also concerns an ALF MOF material with an increased surface range compared to previously known ALF MOF materials. Such ALF MOF material may be obtained by the process of this invention.

In particular, the ALF MOF material of this invention has a Brunauer-Emmet-Teller (BET) surface area ranging from 20 m²/g to 80 m²/g, or from 30 m²/g to 60 m²/g, or from 45 m²/g to 55 m²/g. These BET values were determined using nitrogen (N₂) at 77 K as surface probing.

The increased surface area results in an increase in gas sorption as a larger area can contact and thus adsorb more gas molecules.

In one embodiment the ALF MOF material of this invention has a saturated CO₂ uptake at 273 K and 0.1 bar of at least 3 mmol/g, of at least 3.5 mmol/g, or of at least 4 mmol/g CO₂. These values are significantly higher than the reported values of 2.7 mmol/g for ALF MOF produced from Al(OH)₃ (Evans A. H. et al, 2022, Sci Adv vol 8, DOI: 10.1126/sciadv.ade1473).

In one embodiment the ALF MOF material of this invention has a reduced hysteresis in CO₂ adsorption and desorption. Reduced hysteresis is beneficial to efficiently achieve a high working capacity for gas sorption.

The invention further concerns a method for capturing and/or separating a gas comprised in a group consisting of CO₂, CO, O₂, H₂, H₂O, N₂ and CH₄ by exposing the above-described ALF MOF material to an environment comprising a gas of said group. The invention also concerns separating one or more of said gases from a gas mixture by exposing the above-described ALF MOF material to an environment comprising one or more gases of said group. The invention also concerns a device or system containing the ALF MOF described above for capturing a gas of said group.

### Short description of the drawings

Exemplar embodiments of the invention are disclosed in the description and illustrated by the drawings in which:
**Figure 1** shows Powder X-ray diffraction (PXRD) patterns of ALF MOF products synthesised using Aluminium Hydroxide (SP 2), and a mixture of starting products according to this invention at low concentration (0.45 mol/l) (SP 3) and at high concentration (1.38 mol/l) (SP 4);
**Figure 2** shows Fourier Transform Infrared Spectroscopy (FTIR) spectra of ALF MOF products synthesised using aluminium hydroxide (SP 2), and a mixture of starting products according to this invention at low concentration (0.45 mol/l) (SP 3) and at high concentration (1.38 mol/l) (SP 4);
**Figure 3** shows CO₂ isotherm diagram for the adsorption of CO₂ by ALF MOF products synthesised using Aluminium Hydroxide (SP 2), and a mixture of starting products according to this invention at low concentration (0.45 mol/l) (SP 3) and at high concentration (SP 4);
**Figure 4** shows CO₂ isotherm diagram for the adsorption (filled circles) and desorption (empty circles) of CO₂ by ALF MOF product synthesised according to this invention at high concentration (SP 4);
**Figure 5** shows Powder X-ray diffraction (PXRD) patterns of ALF MOF products synthesised using Aluminium Hydroxide (SP 8a, SP 8c), and a mixture of starting products according to this invention (SP 9a) at low temperature (25 °C);
**Figure 6** shows Fourier Transform Infrared Spectroscopy (FTIR) spectra of ALF MOF products synthesised using Aluminium Hydroxide (SP 8a, SP 8c), and a mixture of starting products according to this invention (SP 9a) at low temperature (25 °C);
**Figure 7** shows Powder X-ray diffraction (PXRD) patterns of ALF MOF products synthesised using Aluminium Hydroxide (SP 8b, SP 8d), and a mixture of starting products according to this invention (SP 9c) at low temperature (60 °C);
**Figure 8** shows Fourier Transform Infrared Spectroscopy (FTIR) spectra of ALF MOF products synthesised using Aluminium Hydroxide (SP 8b, SP 8d), and a mixture of starting products according to this invention (SP 9c) at low temperature (60 °C);

### Examples of embodiments of the present invention

In order to find an improved process for the production of ALF MOF, which would deliver higher yields of ALF MOF material having at least comparable quality to known ALF MOF materials, the inventors tested several aluminium sources as starting products.

As a known starting material for ALF MOF production, the suitability of aluminium hydroxide (Al(OH)₃) for upscaling was evaluated first based on a previously described production method (Evans A. H. et al, 2022, Sci Adv vol 8 DOI: 10.1126/sciadv.ade1473).

Alternative aluminium sources, specifically aluminium diacetate (Al(CH₃COO)₂(OH)), aluminium nitrate (Al(NO₃)₃), and aluminium chloride (AlCl₃) were also tested as starting products for ALF MOF synthesis.

As part of this study, it was investigated whether an increased concentration of the aluminium starting material or an increase in reaction or aging time could boost the yield, scalability and/or quality of the ALF MOF product.

Yields, scalability, the internal surface, as well as CO₂ uptake capacity were assessed for all synthesised ALF MOF products.

The results obtained for the aluminium hydroxide starting product were not encouraging. A three-fold increase in concentration of aluminium hydroxide in an over three-fold increased volume of reaction mixture (SP 2) resulted in a mere doubling of yield of the ALF MOF product. Moreover, it was found that CO₂ uptake of the ALF MOF material was low, i.e. 0.7 mmol/g or less, when produced in the more concentrated reaction mixture, as summarized in Tables 1 and 2.

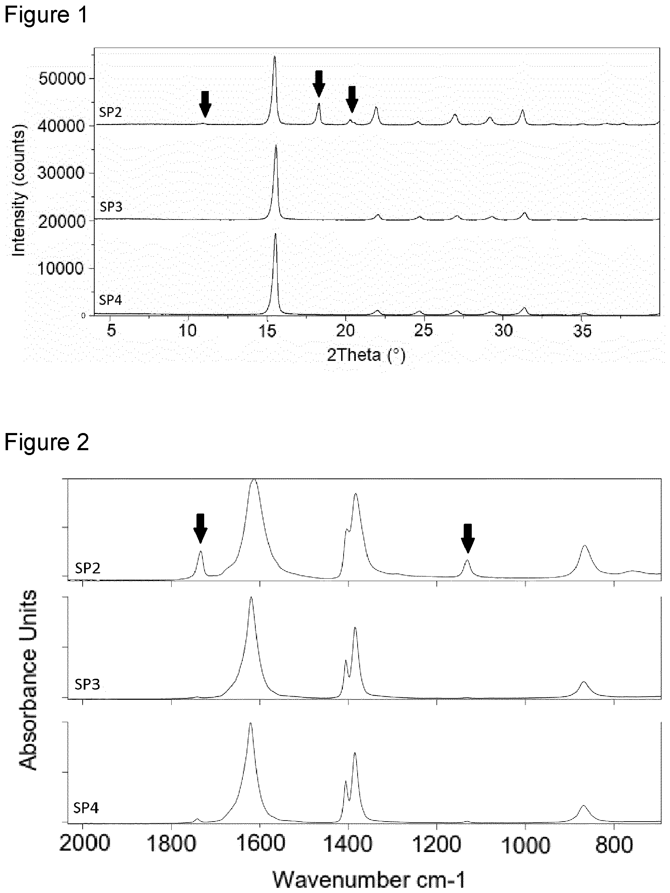

The purity of ALF MOF product obtained from the higher concentrated aluminium hydroxide starting material was also unsatisfactory. At least three different impurity peaks were clearly detectable in the Powder X-ray diffraction (PXRD) profile of the crystalline ALF MOF product, as indicated by arrows in Figure 1.

Attempts to scale the production of ALF MOF to industrial amounts providing aluminium hydroxide as sole aluminium source, were therefore unsuccessful.

Upscaling of ALF MOF production by providing aluminium nitrate as starting product is extremely difficult and dangerous, as increased concentrations of nitrate leads to the formation of an explosive reaction mixture. Higher concentrations of aluminium nitrate as starting product were therefore not tested.

Reasonable product yields, specifically space-time yields of 120 g/l per day, were obtained when aluminium chloride was provided a sole aluminium source at concentrations of either 0.45 mol/l or at 1.38 mol/l and aged for 8h. However, the ALF MOF synthesized with aluminium chloride displayed very a poor gas sorption performance of 0.5 mmol/g CO₂ adsorption or less.

Surprisingly, it was found, that ALF MOF yield and quality could be significantly improved, when a mixture of aluminium diacetate, aluminium nitrate and aluminium chloride was provided as aluminium source.

The results reaction protocols are summarized in Table 1, wherein the results of batches produced under these conditions are shown in Table 2.

ALF MOF products were synthesized in 400 ml volumes of the reaction mixture provided with the mixture of these three aluminium sources.

When the mixture of aluminium starting products was supplied at a concentration of 0.45 mol/l and aged for 8 hours (SP 3), a yield of 45 g/l, or a space-time-yield of 135 g/l per day was achieved. The synthesized ALF MOF material proved to have a 6- to 10-fold improved gas sorption capacity compared to any of the other tested starting materials, with a CO₂ uptake of 4.1 mmol/g.

When the total concentration of the mix of aluminium starting products was increased to 1.38 mol/l (SP 5) the space-time yield was increased by about 2.5-fold to 473 g/l per day. However, it was noted that the CO₂ uptake decreased from 4.1 to 2.9 mmol/g.

A longer reaction time of 24h (SP 4) compared to 8h (SP 5) resulted in an improvement of the CO₂ adsorption of the ALF MOF to 3.9 mmol/g compared to 2.9 mmol/g, whereas the product yield as determined in g/l was not significantly higher, when the reaction time was increased to 24h.

The synthesis from the aluminium diacetate/aluminium nitrate/aluminium chloride mixture of starting products yielded a highly pure ALF MOF, as shown in Figure 1.

The powder X-ray diffraction (PXRD) profiles of the crystalline ALF MOF product produced with synthesis protocols SP 3 and SP 4 showed no detectable impurities.

Fourier Transform Infrared Spectroscopy (FTIR) spectra of ALF MOF products, as presented in Figure 2, revealed the as-synthesised ALF MOF product produced with synthesis protocols SP 3 and SP 4 showed no detectable impurities. The FTIR spectra of ALF MOF produced from aluminium hydroxide (SP 2) showed significant impurity peaks at 1733 cm⁻¹, 1131 cm⁻¹.

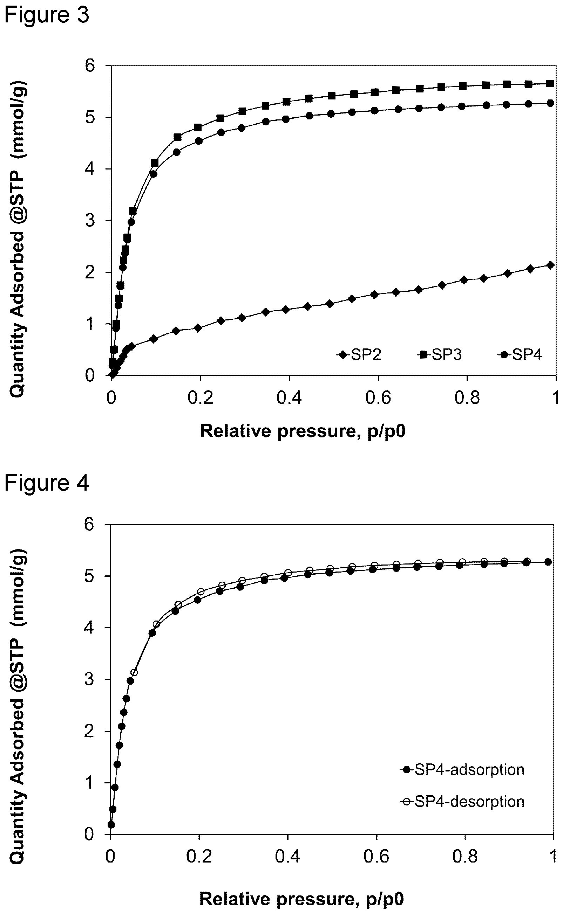

In Figure 3 the CO₂ isotherm diagrams for the adsorption of CO₂ by ALF MOF products synthesised using aluminium hydroxide (SP 2), and the mixture of aluminium diacetate / aluminium nitrate / aluminium chloride starting products are compared (SP 3 - low concentration, SP 4 - high concentration).

As shown in Figure 3, CO₂ uptake in the ALF MOF synthesised according to SP 3 or SP 4 was substantially the same, indicating that the total concentration of the mixture of starting products, as well as a difference in aging time between 8h or 24h did not significantly affect the CO2 uptake. In comparison, the CO₂ uptake of ALF MOF produced from aluminium hydroxide SP 2 was extremely poor.

When aluminium diacetate was provided as sole source of aluminium in the reaction mixture either at 1.38 mol/l (SP 6) or at 2.25 mol/l (SP 7), the yield and quality of the synthesized ALF MOF product were also surprisingly high. A starting concentration of 1.38 mol/l of aluminium diacetate as sole aluminium source yielded 176 g/l of ALF MOF after 24h of reaction time. When 2.25 mol/l aluminium diacetate was provided, 300 g/l of ALF MOF were produced in the same time frame.

It was determined by PXRD that the ALF MOF material produced from the aluminium diacetate / aluminium nitrate / aluminium chloride starting products and from aluminium diacetate adopts the desired ReOs-type crystal structure.

FTIR and PXRD analyses proved that the ALF MOF produced according to methods SP 3, SP 4, SP 5, SP 6, SP 7 or SP 9 contained less than 5% of impurities.

The highly pure, crystalline ALF MOF products displayed a high degree of porosity. The Brunauer-Emmet-Teller (BET) method, a standard method to determine a surface area and porosity distribution of solid materials calculated via N₂ sorption, revealed that the BET surface area of ALF MOF products of this invention is exceptionally high. The BET surface area of an ALF MOF of this invention may range from 20 m²/g to 100 m²/g, or from 30 m²/g to 80 m²/g, or from 40 m²/g to 60 m²/g.

This vast surface area is an important advantage when applied for industrial purposes, as higher surface areas correlate with a better gas sorption performance.

The ALF MOF of this invention can therefore be produced at a high percentage of purity, i.e. 95% or more.

This highly pure, crystalline structure has a high porosity as determined by the BET method and an has a much improved CO₂ uptake compared to ALF MOFs produced using methods know in the art.

Moreover, it was found that the ALF MOF of this invention has a reduced hysteresis in its CO₂ adsorption/desorption. Reduced hysteresis is beneficial to efficiently achieve a high working capacity for gas sorption. As shown in the CO₂ isotherm diagram for the adsorption (filled circles) and desorption (empty circles) of Figure 4, the CO₂ isotherm adsorption and disruption curves for an ALF MOF product synthesised from a mix of starting products according to this invention (SP 4) are almost identical.

The saturated CO₂ uptake at 273 K and measured at partial pressure ranges 0.002 < p/p₀ < 0.98 (po = 1 bar) was determined for ALF MOF material produced from aluminium hydroxide at different relatively low temperatures and compared to ALF MOF material produced from the mix of aluminium starting products according to this invention under the same conditions (Table 3).

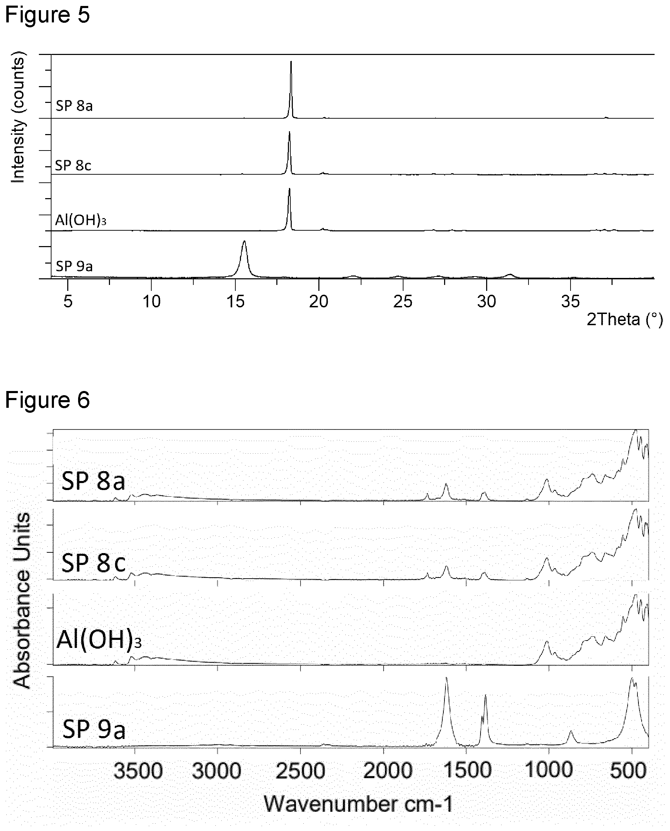

When reaction mixtures containing only aluminium hydroxide as starting product provided at different concentrations (0.15 mol/l in SP 8a and 1.38 mol/l in SP 8c) were incubated at 25 °C almost no ALF MOF was formed. This result was confirmed by PXRD analysis of the precipitates of the reaction mixture after incubation for the indicated aging time at 25 °C, shown in Figure 5. The main PXRD peak detected in these precipitates corresponds to aluminium hydroxide, while no ALF MOF peak was detectable with aluminium hydroxide as starting product.

When SP 9a was performed using the mixture of aluminium starting products under the same reaction conditions, i.e. the same temperature (25°C) and concentration (1.38mol/l), the PXRD pattern of the precipitated product showed a very dominant ALF-MOF peak, while only a minor amount of impurities were detectable (Figure 5). Furthermore, this highly pure ALF-MOF product demonstrated a CO₂ sorption of 2.6 mmol/g which is only slightly reduced compared to CO₂ sorption of ALF-MOF products formed from the same starting materials at higher temperatures (Table 3). Replacing the aluminium sources used in the state of the art with the mixture of starting products of this invention therefore allows not only for the formation of an ALF-MOF at room temperature, but it also delivers a highly pure ALF-MOF product with a very good CO₂ uptake capacity.

FTIR spectra of the same precipitates further confirmed these results, as shown in Figure 6. Only a minor amount of ALF MOF material was detectable in the FTIR spectra. The different concentrations of the aluminium hydroxide starting product in the reaction mixture did not significantly impact on the amounts of ALF MOF produced. The vast majority of the starting product was not transformed.

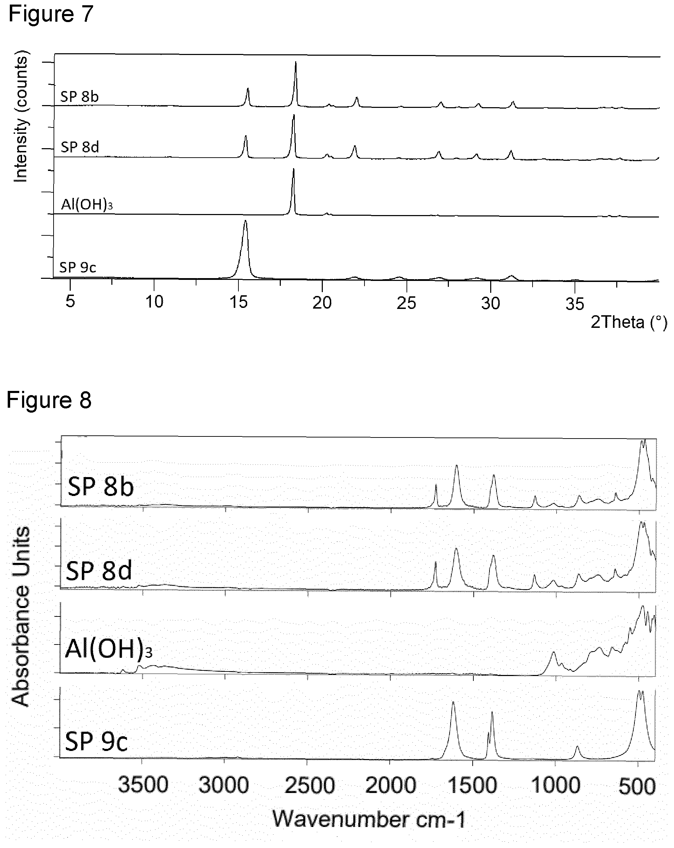

When incubated at 60 °C (SP 8b and SP 8d), aluminium hydroxide yielded some ALF MOF material which was however heavily contaminated with a large amount of impurities and residual starting product. Figure 7 shows PXRD patterns of the precipitated reaction mixture of synthesis protocol SP 8b, containing 0.15 mol/l of aluminium hydroxide, and of the precipitated reaction mixture of synthesis protocol SP 8d, containing 1.38 mol/l of aluminium hydroxide. As before, the difference in concentration of the starting product had no significant bearing on the result. Synthesis of ALF MOF material using the reaction mixture of this invention under the same aging conditions (60 °C, 24h aging) yielded a clear ALF MOF peak and only a minor amount of detectable impurities.

The results were confirmed with FTIR spectra of the precipitated reaction mixtures SP 8b, SP 8c, and SP 9c, as shown in Figure 8.

**Table 1: Overview of different synthesis protocols (SP);**

| **Batch number(synthesis protocol)** | **Metal source** | **Reaction volume (ml)** | **Al source concentration (mol/l)** | **Aging time** |
|---|---|---|---|---|
| **Literature (SP 1)** | Al(OH)₃ | 100 | 0.15 | 48h |
| **702 (SP 2)** | Al(OH)₃ | 320 | 0.45 | 48h |
| **921 (SP 3)** | Al(CH₃COO)₂(OH), Al(Cl₃), Al(NO₃)₃ mix | 400 | 0.45 | 8h |
| **935 (SP 4)** | Al(CH₃COO)₂(OH), Al(Cl₃), Al(NO₃)₃ mix | 400 | 1.38 | 24h |
| **970 (SP 5)** | Al(CH₃COO)₂(OH), Al(Cl₃), Al(NO₃)₃ mix | 400 | 1.38 | 8h |
| **1091 (SP 6)** | Al(CH₃COO)₂(OH) | 400 | 1.38 | 24h |
| **1107 (SP 7)** | Al(CH₃COO)₂(OH) | 400 | 2.25 | 24h |

**Table 2: Effect of synthesis protocol on yields and CO₂ uptake of ALF MOF material;**

| **Batch number** | **Yield (g/l)** | **Space-Time-Yield (g/l/d)** | **CO₂ uptake (p/p0 = 0.1, 273K) (mmol/g)** | **BET (N₂ 77K) (m2/g)** |
|---|---|---|---|---|
| **Literature (SP 1)** | 20 | 10 | 2.7 | 5 |
| **702 (SP 2)** | 41 | 20 | 0.7 | 3 |
| **921 (SP 3)** | 45 | 135 | 4.1 | 69 |
| **935 (SP 4)** | 183 | 183 | 3.9 | 48 |
| **970 (SP 5)** | 158 | 473 | 2.9 | 64 |
| **1091 (SP 6)** | 176 | 176 | 3.5 | 71 |
| **1106 (SP 7)** | 318 | 318 | 3.8 | 38 |

**Table 3 Effect of aluminium source and aging temperature on CO₂ uptake of ALF MOF material; "n.d." = not determinable;**

| **Batch number** | **Aluminium source** | **Al source concentration (mol/l)** | **Reaction Temperature (°C)** | **CO₂ uptake (p/p0** = **0.1, 273K) (mmol/g)** |
|---|---|---|---|---|
| **1134 (SP 8a)** | Al(OH)₃ | 0.15 | 25 | n.d. ALF MOF not formed |
| **1135 (SP 8b)** | Al(OH)₃ | 0.15 | 60 | n.d. large impurities present |
| **1136 (SP 8c)** | Al(OH)₃ | 1.38 | 25 | n.d. ALF MOF not formed |
| **1137 (SP 8d)** | Al(OH)₃ | 1.38 | 60 | n.d. large impurities present |
| **1128 (SP 9a)** | Al(CH₃COO)₂(OH), Al(Cl₃), Al(NO₃)₃ mix | 1.38 | 25 | 2.6 |
| **1129 (SP 9b)** | Al(CH₃COO)₂(OH), Al(Cl₃), Al(NO₃)₃ mix | 1.38 | 40 | 2.9 |
| **1106 (SP 9c)** | Al(CH₃COO)₂(OH), Al(Cl₃), Al(NO₃)₃ mix | 1.38 | 60 | 3.5 |

### Synthesis of ALF MOF material

### Synthesis protocol 1 (SP 1): Prior-art - aluminium hydroxide

ALF MOF was produced using aluminium hydroxide as aluminium source according to a previously published protocol (Evans A. H. et al, 2022, Sci Adv vol 8, DOI: 10.1126/sciadv.ade1473).

Formic acid (100 ml) and aluminium hydroxide (1.2 g, 0.015 mol) were refluxed in a 250-ml round-bottom flask at 100 °C (373 K) for 48 hours. After completing the reaction and cooling to room temperature, the solid was separated from the mother liquor using vacuum filtration, and the white solid was rinsed with ethanol (3× 50ml) and dried in a conventional oven at 95 °C overnight.

### Synthesis protocol 2 (SP 2): aluminium hydroxide at higher concentration

To assess the effect of the concentration of the starting product on the yield and quality of the produced ALF MOF material, the concentration of aluminium hydroxide was increased.

Formic acid (320 ml) and aluminium hydroxide (11.5 g, 0.144 mol) were refluxed in a 550-ml round-bottom flask at 100 °C (373 K) for 48 hours. After completing the reaction and cooling to room temperature, the solid was separated from the mother liquor using vacuum filtration, and the white solid was rinsed with ethanol (4x 100ml) and dried in a conventional oven at 95 °C overnight.

### Synthesis protocol 3 (SP 3): starting product mixture

Aluminium nitrate nonahydrate (3.4 g, 0.009 mol) was added carefully to a solution of formic acid (400 ml) and de-ionised water (20 ml) in a 500 ml glass reactor and stirred at room temperature for 30 minutes. Aluminium chloride hexahydrate (2.2 g, 0.009 mol) and aluminium acetate (basic) (26.3 g, 0.162 mol) were added and the mixture was heated to 98 °C for 8 hours. After cooling to room temperature, the solid was separated from the mother liquor using vacuum filtration, and the white solid was rinsed with ethanol (6× 100ml) and dried in a conventional oven at 95 °C overnight.

### Synthesis protocol 4 (SP 4): starting product mixture, higher concentration, 24h aging

Aluminum nitrate nonahydrate (10.3 g, 0.0275 mol) was added carefully to a solution of formic acid (400 ml) and de-ionised water (20 ml) in a 500 ml glass reactor and stirred at room temperature for 30 minutes. Aluminum chloride hexahydrate (6.6 g, 0.0275 mol) and aluminium acetate (basic) (80.2 g, 0.495 mol) were added and the mixture was heated to 98 °C for 24 hours. After cooling to room temperature, the solid was separated from the mother liquor using vacuum filtration, and the white solid was rinsed with ethanol (6x 100ml) and dried in a conventional oven at 95 °C overnight.

### Synthesis protocol 5 (SP 5): starting product mixture, higher concentration, 8h aging

Aluminum nitrate nonahydrate (9.0 g, 0.024 mol) was added carefully to a solution of formic acid (400 ml) and de-ionised water (20 ml) in a 500 ml glass reactor and stirred at room temperature for 30 minutes. Aluminum chloride hexahydrate (5.8 g, 0.024 mol) and aluminium acetate (basic) (70.0 g, 0.432 mol) were added and the mixture was heated to 98 °C for 8 hours. After cooling to room temperature, the solid was separated from the mother liquor using vacuum filtration, and the white solid was rinsed with ethanol (6x 100ml) and dried in a conventional oven at 95 °C overnight.

### Synthesis protocol 6 (SP 6): aluminium diacetate

Aluminum acetate (basic) (9.0 g, 0.55 mol) was added carefully to a solution of formic acid (400 ml) and de-ionised water (20 ml) in a 500 ml glass reactor and stirred at room temperature for 30 minutes. This mixture was heated to 98 °C for 24 hours. After cooling to room temperature, the solid was separated from the mother liquor using vacuum filtration, and the white solid was rinsed with ethanol (6x 100ml) and dried in a conventional oven at 95 °C overnight.

### Synthesis protocol 7 (SP 7): starting product mixture, higher concentration, 24h aging

Aluminum nitrate nonahydrate (16.8 g, 0.045 mol) was added carefully to a solution of formic acid (400 ml) and de-ionised water (20 ml) in a 500 ml glass reactor and stirred at room temperature for 30 minutes. Aluminum chloride hexahydrate (10.8 g, 0.045 mol) and aluminium acetate (basic) (130.8 g, 0.81 mol) were added and the mixture was heated to 98 °C for 24 hours. After cooling to room temperature, the solid was separated from the mother liquor using vacuum filtration, and the white solid was rinsed with ethanol (6× 100ml) and dried in a conventional oven at 95 °C overnight.

### Synthesis protocol 8 (SP 8): aluminium hydroxide at 25 °C and at 60 °C

Aluminum hydroxide in either (4.8 g, 0.06 mol [SP 8a, SP 8b]) or (14.4 g, 0.18 mol [SP 8c, SP 8d]) was added carefully to a solution of formic acid (400 ml) in a 500 ml glass reactor and stirred at room temperature for 30 minutes. This mixture was heated to either 25 °C (SP 8a, SP 8c) or 60 °C (SP 8b, SP 8d) for 24 hours. After cooling to room temperature, the solid was separated from the mother liquor using vacuum filtration, and the white solid was rinsed with ethanol (6x 100ml) and dried in a conventional oven at 95 °C overnight.

### Synthesis protocol 9 (SP 9): starting product mixture at 25 °C, at 40 °C, at 60 °C, and at 98 °C

Aluminium nitrate nonahydrate (9.0 g, 0.024 mol) was added carefully to a solution of formic acid (400 ml) and de-ionised water (20 ml) in a 500 ml glass reactor and stirred at room temperature for 30 minutes. Aluminium chloride hexahydrate (5.8 g, 0.024 mol) and aluminium acetate (basic) (70.0 g, 0.432 mol) were added and the mixture was heated to either 25 °C (SP 9a), 40 °C (SP 9b) or 60 °C (SP 9c) for 24 hours, or for 98 °C for 8 hours. After cooling to room temperature, the solid was separated from the mother liquor using vacuum filtration, and the white solid was rinsed with ethanol (6x 100ml) and dried in a conventional oven at 95 °C overnight.

### Determination of internal surface

Product yield was determined by measuring the mass of moist product collected at the end of the complete production process (synthesis, filtration, washing + drying). The Dried product yield takes into account any solvent molecules which are trapped within the pores. These are quantified gravimetrically (L.O.D.) by measuring the mass of a representative sample (approx. 100 mg) before and after activation (activation = heating under vacuum (0.01 Torr) at 453K, 18 hours). Dried product yield (g) = moist product (g) * L.O.D. (%)

Nitrogen sorption isotherms at 77 K were measured on a Quantachrome NOVAtouch LX4 surface area & pore size analyzer. Samples (about 100 mg) of the production batch were activated for 18 hours under reduced pressure (38 mTorr static vacuum) at 180 °C prior to analysis. The internal surface (BET) was calculated from these N₂ isotherms in the range of 0.005 < p/p0 < 0.028 according the criteria defined in "Application of Consistency Criteria To Calculate BET Areas of Micro- And Mesoporous Metal-Organic Frameworks" (J. Am. Chem. Soc., 2016, 138, 215-224).

### CO₂ uptake of synthesized MOF material

To determine the efficiency of the ALF MOF material of this invention as a CO₂ capturing material, the CO₂ uptake of the material was measured.

CO₂ isotherms at 273 K were measured on a Quantachrome NOVAtouch LX4 surface area & pore size analyzer. Samples (about 100 mg) of the production batch were activated for 18 hours under reduced pressure (38 mTorr static vacuum) at 180 °C prior to analysis and the activated sample mass was accurately recorded. The CO₂ adsorption was then measured at partial pressure ranges 0.002 < p/p0 < 0.98, followed by desorption at partial pressure ranges 0.98 > p/p0 > 0.05 where p0 = 1 bar(a) at a controlled temperature of 273K (controlled using an insulated isothermal bath). The CO₂ uptake at p/p0 = 0.1 was recorded in mmol/g.

### Powder X-ray diffraction (PXRD)

Please provide a paragraph on the method. PXRD patterns were collected on as-synthesised dried powders using a Malvern Panalytical Aeris benchtop diffractometer with Cu Ka radiation (λ = 1.5418 Å, 30 kV, and 40 mA). All the PXRD patterns were recorded from 4° to 40° (2θ) with a step of 0.04° and a scan speed of 1 s per step under ambient conditions.

### Fourier Transform Infrared Spectroscopy (FTIR)

FTIR spectra were measured on a Bruker ALPHA II with Platinum ATR attachment. As-synthesised samples were measured at ambient temperature between 400 - 4000 cm⁻¹, with a background of ambient air measured and subtracted prior to each measurement.

## Claims

1. A process for producing an aluminium formate (ALF) metal-organic framework (MOF) material, comprising the steps of
(i) providing aluminium diacetate (Al(CH₃COO)₂(OH)) or any of its hydrates as a starting product,
or
providing a mixture of starting products comprising
- aluminium diacetate (Al(CH₃COO)₂(OH) or any of its hydrates,
- aluminium nitrate (Al(NO₃)₃) or any of its hydrates, and
- aluminium chloride (AlCl₃) or its hydrates,
in a solution comprising formic acid to form a reaction mixture, and
(ii) aging said reaction mixture for a period of time.

2. The process of claim 1, wherein the reaction mixture ages at a temperature of 60 °C to 105 °C, or at a temperature of 90 °C to 101 °C, or at for example at 98 °C.

3. The process of claim 1 or 2, wherein the starting products are provided in an aqueous formic acid solution, comprising 1 vol% to 15 vol%, or 1 vol% to 12 vol%, or 1 vol% to 10vol%, for example 5 vol% of water.

4. The process of any of any of claims 1 to 3, wherein the concentration of the aluminium starting products provided in the reaction mixture ranges 0.1 mol/l to 2.5 mol/l, or from 0.4 mol/l to 1.4 mol/l.

5. The process of any of any of claims 1 to 4, wherein the reaction mixture is provided with the mixture of starting products, and wherein the mole ratio of aluminium diacetate and any of its hydrates to aluminium nitrate and any of its hydrates is 5:1 to 30:1, or 10:1 to 25:1, or 15:1 to 20:1, or 18:1.

6. The process of any of any of claims 1 to 5, wherein the reaction mixture is provided with the mixture of starting products, and wherein the mole ratio of aluminium diacetate and any of its hydrates to aluminium chloride and any of its hydrates is 5:1 to 30:1, or 10:1 to 25:1, or 15:1 to 20:1, or 18:1.

7. The process of any of any of claims 1 to 6, wherein aging period is 4h to 48 h, or 8h to 24h, or 4h to 12h.

8. The process of any of any of claims 1 to 7, comprising cooling the aged reaction mixture and subsequently filtrating the reaction mixture to retain an intermediate product, which is a wet aluminium formate metal-organic framework (ALF MOF) material and, optionally, washing said intermediate product with an organic solvent, for example polar volatile solvent, such as a short chain alcohol, acetone, acetonitrile or tetrahydrofuran (THF).

9. The process of claim 8, comprising drying the intermediate product to obtain a dried ALF MOF material as end product.

10. The process of any of claims 1 to 9, having a product yield of at least 90% or at least 95%, or at least 98%, or 100%.

11. The process of any of claims 1 to 10, yielding a crystalline product of a ReOs-type crystalline structure comprising less than 5%, or less than 3% of impurities.

12. An aluminium formate (ALF) metallic organic framework (MOF) material having a Brunauer-Emmet-Teller (BET) surface area ranging from 20 m²/g to 100 m²/g, or from 30 m²/g to 80 m²/g, or from 40 m²/g to 60 m²/g.

13. The ALF MOF material of claim 12, having a saturated CO₂ uptake at 273 K and 0.1 bar of at least 3 mmol/g, of at least 3.5 mmol/g, or of at least 4 mmol/g CO₂.

14. A method of capturing a gas comprised in a group consisting of CO₂, O₂, H₂, H₂O, N₂ and CH₄ comprising the step of exposing the ALF MOF produced according to the process of any of claims 1 to 11, or exposing the ALF MOF of any of claims 12 or 13 to an environment containing a gas comprised in a group consisting of CO₂, O₂, H₂, H₂O, N₂ and CH₄

15. A device or system for capturing a gas comprised in a group consisting of CO₂, O₂, H₂, H₂O, N₂ and CH₄ comprising the ALF MOF produced according to the process of any of claims 1 to 11, or comprising the ALF MOF of any of claims 12 to 14.
